# EUROPEAN PATENT SPECIFICATION

(11) **EP 3 478 134 B1**
(45) Date of publication and mention of the grant of the patent: **01.04.2020**
(21) Application number: 16733598.3
(22) Date of filing: 30.06.2016
(51) Int. Cl.: A47J 31/057

(54) **COFFEE MACHINE**
KAFFEEMASCHINE
MACHINE À CAFÉ

(43) Date of publication of application: 08.05.2019
(73) Proprietor: AB Electrolux, 105 45 Stockholm (SE)
(72) Inventor: ARLANDER, Per, 105 45 Stockholm (SE); TIAN, Jiujun, Shanghai 200072 (CN); ANDERSSON, Martin, 105 45 Stockholm (SE)
(74) Representative: Electrolux Group Patents
(86) International application number: PCT/EP2016/065437
(87) International publication number: WO 2018/001499

(56) References cited:
- WO-A1-2015/124592
- US-A- 3 570 390
- US-A- 5 388 501
- US-A1- 2007 157 820
- US-A1- 2010 183 778
- US-A1- 2014 109 667

## Description

### TECHNICAL FIELD

Embodiments herein relate to a coffee machine.

### BACKGROUND

Today, when drip coffee is brewed in a coffee machine, a user pours an amount of water in a water container depending on how much coffee the user wishes to brew. A common way of measuring the amount of water is to use a graduation e.g. printed on the water container. The graduation shows how many cups of coffee the amount of water in the water container corresponds to. One problem with such a coffee machine is that the brewing time differs depending on the amount of water poured in the water container. Greater amounts of water results in longer brewing time.

US3570390 discloses a coffee machine comprising a control means arranged to control a thermostat to regulate heat output from a heater for varying pumping rate of a pump for pumping water. The pumping rate is regulated as a function of water volume, i.e. how many cups of coffee to be brewed. A user may manually adjust a handle, and thereby the thermostat, to a position corresponding to the number of cups. One problem with the coffee machine of US3570390 is that the user may incorrectly read the volume of the water and thereby incorrectly adjust the thermostat. A further problem is that the user may forget to adjust the thermostat to a correct number of cups to be brewed.

Document US-A-2010/0183778 discloses a further coffee machine comprising a control unit to control a pump to cause it to pump a selected amount of water to be brewed.

### SUMMARY

An object of the embodiments herein is to provide a coffee machine arranged to automatically control a pump of the coffee machine to pump an amount of water during a predetermined period of time.

According to an aspect of the present disclosure, the object is achieved by a coffee machine comprising: a water reservoir arranged to provide water for brewing coffee, a container arranged to receive the water and to hold a coffee substance, a pump arranged to pump the water from the water reservoir to the container, and a measuring means arranged to measure an amount of water to be brewed in the water reservoir. Thus, the amount of water to be brewed is automatically measured by the measuring means. Thereby, a user of the coffee machine does not need to check how much water has been poured in the water reservoir as is needed to be done in known coffee machines. In this manner, risks of the user forgetting to read the amount of water or reading the amount of water is incorrectly is eliminated or at least reduced. Further, the amount of water is determined more accurately compare to known coffee machines since no manual intervention is required. To sum up, a more reliable and user-friendly coffee machine is provided.

The coffee machine is arranged to measure an actual flow speed of water from the water reservoir to the container. Thereby, the actual flow speed of water, such as a current flow speed, a present flow speed or the like, from the water reservoir to the container is monitored and known during operation of the coffee machine.

The coffee machine further comprises a control unit arranged to control the pump to generate a desired flow speed of water based on: the amount of water to be brewed, a predetermined period of time, and the actual flow speed, whereby the amount of water is provided to the container during the predetermined period of time. Thereby, the pump is controlled, i.e. in an automatic control loop managed by the control unit, to generate said desired flow speed of water based on several inputs. The inputs include the amount of water to be brewed, the predetermined period of time, and the actual flow speed to provide, i.e. to deliver said amount of water to the container during the predetermined period of time. In other words, the pump is controlled according to the automatic control loop where the desired flow speed of water is calculated based on amongst others the actual flow speed measured by the coffee machine. Thereby, an improved control of the pump is achieved that improves capability of delivering of the amount of water to the container during said predetermined period of time. Further, the pump is controlled automatically, i.e. without manual intervention by the user. Consequently, a coffee machine arranged to automatically control the pump to pump the amount of water during the predetermined period of time is provided.

As a result, the above mentioned object is achieved.

According to some embodiments, the measuring means is further arranged to measure the actual flow speed of water. Thus, the actual flow speed may be measured in a simple manner by the measuring means without need of any additional means for measuring the actual flow speed. Thereby, a robust coffee machine is achieved enabling an improved control of the pump to pump the water from the water reservoir to the container.

The coffee machine may comprise a flowmeter arranged to measure the actual flow speed of water. Thereby, the actual flow speed of water may be measured by the flowmeter that may be installed at a desired location between the water reservoir and the container. The desired location of the flowmeter within the coffee machine may improve result of measurement of the actual flow speed of water. Accordingly, the control of the pump may also be improved by arranging the flowmeter at a suitable location within the coffee machine. Thus, an adaptable, i.e. flexible, coffee machine with improved control of the pump is provided.

According to some embodiments, the control unit is arranged to control the pump by controlling a speed of the pump caused by an electric motor arranged to drive the pump. Thus, the pump may be controlled in a simple and efficient manner.

The pump is continuously controlled. In other words, the pump is controlled in a loop where data regarding the actual flow speed is measured continuously. The data is then sent to the control unit for control of the pump continuously, e.g. uninterruptedly, repeatedly, regularly and the like, during said predetermined time. Thus, any changes of the flow speed may be detected more or less immediately. Once detected, the changes of flow speed may be sent as the data to the control unit, which controls the pump to generate a new, corrected desired flow speed of water based on said actual flow speed. Thereby, an improved control of the pump is achieved enabling conveyance of said amount of water by the pump to the container during said predetermined period of time.

According to the invention, the predetermined period of time comprises a first sub-period of time and a second sub-period of time, being subsequent to the first sub-period of time, wherein the control unit is arranged to control the pump to generate a first desired flow speed of water during the first sub-period of time and a second desired flow speed of water during the second sub-period of time, wherein the first desired flow speed is greater than the second desired flow speed. In this manner, the water is pumped faster during the first sub-period of time than during the second sub-period of time. Since the first desired flow speed is greater than the second desired flow speed, a period for reaching a brewing temperature may be shortened. Further, the coffee substance is made damp faster such that a so called contact time between water and coffee substance may be adjusted appropriately. As a result, improved quality of the coffee may be achieved.

In some embodiments the coffee machine is arranged to make drip coffee.

Further features of, and advantages with, the embodiments herein will become apparent when studying the appended claims and the following detailed description. Those skilled in the art will realize that the different features described may be combined to create embodiments other than those described in the following, without departing from the scope of the embodiments herein, as defined by the appended claims.

### BRIEF DESCRIPTION OF THE DRAWINGS

The various aspects of the embodiments herein, including its particular features and advantages, will be readily understood from the following detailed description and the accompanying drawings, in which:
Fig. 1 is a side view illustrating an exemplifying coffee machine,
Fig. 2 is a side view illustrating another exemplifying coffee machine,
Fig. 3.1 is a plan view illustrating an exemplifying filter holding assembly,
Fig. 3.2 is another plan view illustrating the exemplifying filter holding assembly in Fig. 3.1, and
Fig. 4 is a flowchart of a method for controlling a flow rate of a liquid.

### DETAILED DESCRIPTION

The embodiments herein will now be described more fully with reference to the accompanying drawings, in which example embodiments are shown. Disclosed features of example embodiments may be combined. Like numbers refer to like elements throughout. Well-known functions or constructions will not necessarily be described in detail for brevity and/or clarity.

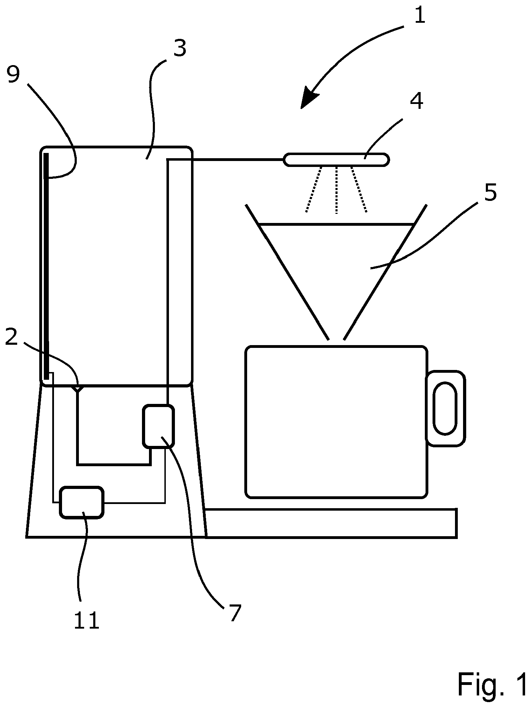

Fig. 1 illustrates a coffee machine 1 comprising: a water reservoir 3 arranged to provide water for brewing coffee, a container 5 arranged to receive the water and to hold a coffee substance, a pump 7 arranged to pump the water from the water reservoir 3 to the container 5, and a measuring means 9 arranged to measure an amount of water to be brewed in the water reservoir 3. In other words, the measuring means 9 is arranged to measure a level of water in the water reservoir 3. As can be seen in the Fig. 1, the water reservoir 3 comprises an outlet 2 through which the water is pumped out from the water reservoir 3 by the pump 7. Further, the water passes the pump 7 and flows to a discharger 4 arranged to discharge the water into the container 5. During passage of the water from the reservoir 3 to the container 5, the water is heated in a conventional manner.

The measuring means 9 may comprise any known type of sensor for measuring a level, i.e. amount or volume of water in the reservoir 3, such as a capacitive sensor, a float sensor, or the like.

The measuring means 9 may also be arranged to measure an actual flow speed of water from the water reservoir 3 to the container 5. In order to measure the actual flow speed of water, the measuring means 9 may repeatedly measure the amount of water while keeping track of time between such measurements. Hence, a measure of the actual flow speed of water may be obtained, e.g. by calculation in a control unit 11, whose further purposes and functions are described in more detail below.

Accordingly, as illustrated in Fig. 1, the coffee machine 1 comprises the control unit 11 arranged to control the pump 7 to generate a desired flow speed of water. The desired flow speed and the actual flow speed described above refer to a volume of water per a time unit as for example ml/s. The control unit 11 may be arranged to control the pump 7 by controlling a speed of the pump 7. The speed of the pump 7, e.g. number of revolutions or frequency, may be caused by an electric motor (not shown) arranged to drive the pump 7. The electric motor may be provided as an integral part of the pump 7, or as an external part of the pump 7. The speed of the water pump 7 causes a certain flow of the water in the coffee machine. The pump 7 is controlled to generate the desired flow speed of water based on: the amount of water to be brewed measured by the measuring means 9, a predetermined period of time, and the actual flow speed measured by the measuring means 9. The amount of water to be brewed refers to the amount of water to be brewed into coffee, e.g. after the water has passed the coffee substance in the container 5. The pump 7 is controlled to provide the amount of water to the container 5 during the predetermined period of time. The pump 7 may be a piston pump, a heat driven pump, a boiler pump or the like. The predetermined period of time is a time range that may be programed in the control unit. Usually, the predetermined period of time is in a range of 2-5 min.

As illustrated in Fig. 1, the control unit 11 is connected, e.g. electrically connected, to the measuring means 9 and to the pump 7. Thus, the control unit 11 may electrically measure the amount of water in the reservoir 3 and the actual flow speed of water from the reservoir 3 to the container 5. For example, the control unit 11 may receive signals, from the measuring means 9, about the amount of water and the actual flow speed. Information about the amount of water and about the actual flow speed of water together with a known value of the predetermined time are used to calculate the desired flow speed of water that the pump 7 needs to achieve, or generate, such that the amount of water will be pumped during said predetermined period of time.

Operation of the coffee machine 1 will be now described in more detail.

When a start button (not shown) is pressed, the control unit 11 checks the water level in the reservoir 3, i.e. the amount of water in the reservoir 3 is measured by the measuring means 9 and received by the control unit 11 connected to the measuring means 9. The control unit 11 calculates an initial desired flow speed of water to enable pumping the amount of water during said predetermined period of time. For the calculation of the initial desired flow speed, the predetermined period of time is usually set to 4-6 min, e.g. depending on the amount of water to be brewed into coffee. As an example, the pump 7 may be run at approximately at 4.8 ml/s during an initial period of operation of the pump 7. The initial period may be about 15 s, or similar. During the initial period of time the control unit 11 receives information about the actual flow speed of the water flowing between the reservoir 3 and container 5, which actual flow speed may be measured by said measuring means 9 comprising the flow sensor described above. Thus, depending on said actual flow speed, the control unit causes the pump to slow down, i.e. to decrease the speed of the pump 7, or to increase the speed to achieve that said amount of water will be pumped to the container 5 during the predetermined period of time. Thus, according to the above described operation of the coffee machine 1, it may be said that the pump 7 of the coffee machine 1 is controlled continuously, e.g. as repeated frequently within the predetermined period of time.

In one example, the pump 7 is controlled by adjusting voltage over the pump 7 by Proportional Integral regulation (PI-regulation) as is well-known within automatic control engineering. When the measuring means 9 generate a signal, indicating that the actual flow speed of water is zero, the pump 7 is stopped.

According to some embodiments, the predetermined period of time may comprise a first sub-period of time and a second sub-period of time, being subsequent to the first sub-period of time. The control unit 11 may then be arranged to control the pump 7 to generate a first desired flow speed of water during the first sub-period of time and a second desired flow speed of water during the second sub-period of time, wherein the first desired flow speed may be greater than the second desired flow speed.

In a similar way as described above, for calculation of the initial desired flow speed, the predetermined period of time may be set to 4-6 min, e.g. depending on the amount of water to be brewed into coffee. Further, during for example approximately first 15 seconds of the first period of time the pump 7 may be run at approximately 4.8 ml/s. During these, for example 15 seconds the control unit 11 receivers information about the actual flow speed of the water flowing between the reservoir 3 and container 5 to calculate the first desired flow speed of water during the first sub-period of time and the second desired flow speed of water during the second sub-period of time.

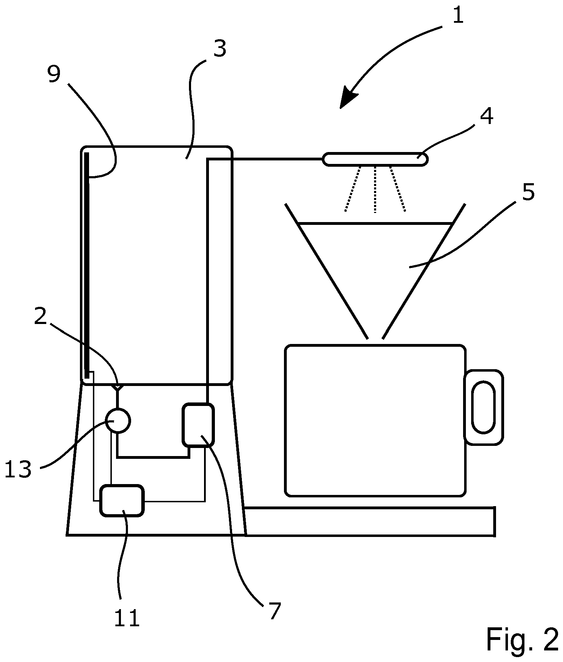

Fig. 2 illustrates a further embodiment of the coffee machine 1 shown in Fig. 1 where a flowmeter 13 has been installed within the coffee machine 1. As illustrated in Fig. 2, the flowmeter 13 is arranged between the outlet 2 of the water reservoir 3 and the pump 7. However, the flowmeter 13 may be arranged at other locations, for example between the pump 7 and the discharger 4. The flowmeter 13 is connected to the control unit 11, thus the control unit 11 may receive signals from the flowmeter 13 regarding actual flow speed of water. Accordingly, with the embodiment illustrated in Fig. 2, the measuring means 9 need not be used for measuring the amount of water in the water container 3 as with the embodiment of Fig. 1. The flowmeter 13 may be any suitable flowmeter for measuring a flow of a liquid. For example, the flowmeter 13 may comprise a Hall sensor (Hall effect sensor) and an impeller comprising magnets, wherein the impeller is driven by a flow of water received by the flowmeter. During rotation of the impeller the sensor and the magnets generate signals corresponding to the flow of water. The signals are sent to the control unit.

Different number of cups of coffee desired to be brewed in the coffee machine 1 of Fig. 1 and/or Fig. 2 requires different amount of water. The different amount of water in the container 5 (shown in Fig. 1 and Fig. 2) implies that a time during which the water is in contact with the coffee substance in the container 5 to brew coffee may be different. This time is typically referred to as contact time. Quality of coffee brewed in the coffee machine may be dependent on the contact time. To improve the quality of coffee brewed in the coffee machine a filter holding assembly as well as a method for controlling a flow rate of a liquid out from the filter holding assembly in a coffee machine may be provided. The filter holding assembly and the method are described in more detail below.

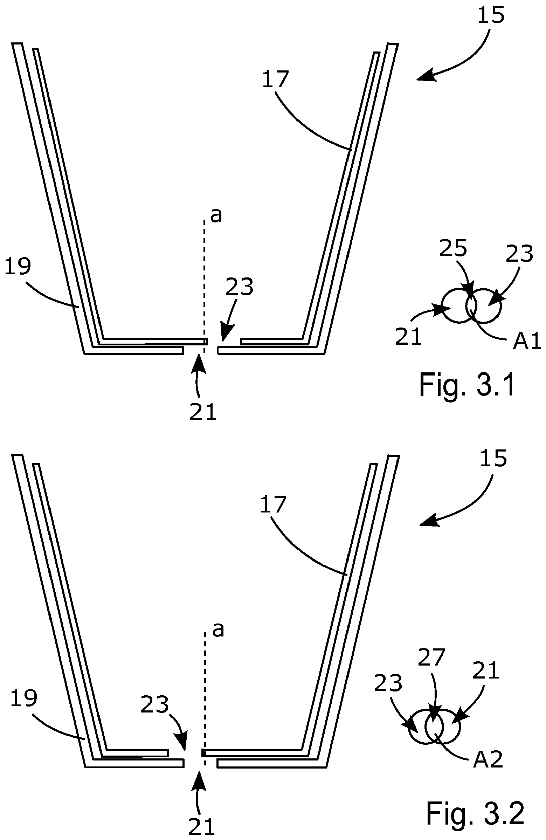

Fig. 3.1 illustrates an exemplifying filter holding assembly 15 for a coffee machine. The filter holding assembly 15 may comprise the container 5 shown in Fig. 1 and Fig. 2. The filter holding assembly 15 comprises: a filter funnel 17 for receiving a filter (not shown) for filtering a liquid of the coffee machine and a holder 19 arranged to receive the filter funnel 17. Typically, the liquid is water. The holder 19 comprises a first opening 21 and the filter funnel 17 comprises a second opening 23. According to the embodiments in Fig. 3.1 and 3.2, the first and the second openings 21, 23 are circular, e.g. in shape of a respective circle. However, the openings 21 and 23 may have other forms, such as square, rectangle, triangle elongated oval and the like. The openings 21, 23 may have the same size or may have different sizes. The filter funnel 17 in Fig. 3.1 is inserted in the holder 19 in a first position relatively the holder 19. In the first position the first opening 21 and the second opening 23 are arranged to form a first passage 25 (as seen from above) for conveying the liquid out from the filter holding assembly 15. The first passage 25 has a first cross-sectional area A1. The first cross-sectional area A1 may for example be approximately 2 mm².

Fig. 3.2 illustrates the filter holding assembly 15 illustrated in Fig. 3.1. The filter funnel 17 in Fig. 3.2 is inserted in the holder 19 in a second position relatively the holder 19. According to the embodiments shown in Fig. 3.2, the second position corresponds to a 180-degree rotation of the filter funnel 17 relatively first position shown in Fig. 3.1. In some embodiments the second position corresponds to another angle (different from 180 degrees) of rotation of the filter funnel 17 relatively the holder 19. In the second position the first opening 21 and the second opening 23 are arranged to form a second passage 27 for conveying the liquid out from the filter holding assembly 15. The second passage 27 has a second cross-sectional area A2. The second cross-sectional area A2 may for example be approximately 9 mm². As can be seen, the first cross-sectional area A1 in Fig. 3.1 is smaller than the second cross-sectional area A2 in Fig. 3.2. The relation between the first cross-sectional area Aland the second cross-sectional area A2 may for example be 1:4, i.e. the second cross-sectional area A2 may be four times as big as the first cross-sectional area A1.

The filter holding assembly 15 may comprise a sealing (not shown) arranged between the filter funnel 17 and the holder 19 when the filter funnel 17 has been inserted in the holder 19, which sealing is arranged to secure that the passages 25 and 27 are leak-free.

Since the first passage 25 with the first cross-sectional area A1 is obtained in said first position relatively the holder 19 and the second passage 27 with the second cross-sectional area A2 is obtained in said second position of the filter funnel 17 relatively the holder 19, a change between the first cross-sectional area A1 and the second cross-sectional area A2 is easily performed, e.g. by the user, by changing between the first and second positions of the filter funnel 17 relatively the holder 19 when inserting the filter funnel 17 into the holder 19. The filter funnel 17 may for example be turned around an axis a to change said position relatively the holder 19. The filter funnel 17 may be turned around the axis a when the filter funnel 17 has been removed from the holder 19. The axis a may be a symmetrical axle of the filter funnel 17. According to some embodiments, the filter funnel 17 and the holder 19 are arranged to enable rotation of the funnel 17 within the holder 19 to change position of the filter funnel 17 relatively the holder 19.

In order to better explain the embodiments herein, a channel is introduced. The channel comprises the first passage 25 and/or the second passage 27, in which the liquid passes. Thus since the cross-sectional area of the channel may be changed, the time it takes for a liquid, typically water with coffee substance, to flow through the channel out from the filter holding assembly 15 may be adjusted in a simple manner due to that time for passing is inversely proportional to cross-sectional. Thus, when less amount of water is desired to be used for brewing coffee the cross-sectional area may be decreased by changing the position of the filter funnel 17 relatively the holder 19 to decrease a flow rate of the liquid out from the filter holding assembly 15 through said channel. When a larger amount of water is desired to be used for brewing coffee the cross-sectional area may be increased simply by changing the position of the filter funnel 17 relatively the holder 19 to increase the flow rate of the liquid out from the filter holding assembly 15 through said channel. As a result, the time the water is in contact with the coffee substance in the filter funnel 17 may be regulated, or controlled, in a simple manner. Further, high quality of coffee brewed may be achieved independently of the amount of water used for brewing.

The flow rate and the flow speed described above refer to a volume of water or liquid per a time unit as for example ml/s.

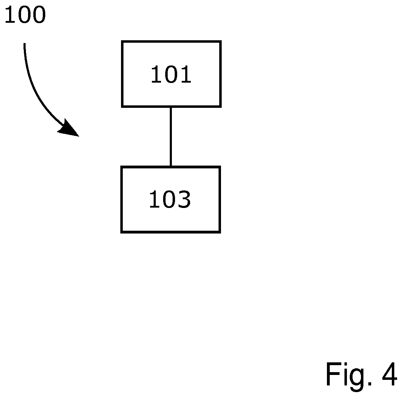

Fig. 4 illustrates a method 100 for controlling the flow rate of a liquid out from the filter holding assembly 15 shown in Fig. 3.1 and 3.2. The method may be performed by a user of the coffee machine, or even a humanoid robot using the coffee machine. The method 100 comprises the steps of - inserting 101 the filter funnel 17 in the holder 19 in the first position relatively the holder 19, in which the first position the first opening 21 of the holder 19 and the second opening 23 of the filter funnel 17 are arranged to form the first passage 25 for conveying the liquid, the first passage 25 having the first cross-sectional area A1, and - inserting 103 the filter funnel 17 in the holder 19 in the second position relatively the holder 19, in which the second position the first opening 21 and the second opening 23 are arranged to form the second passage 27 for conveying the liquid, the second passage 27 having the second cross-sectional area A2, wherein the second cross-sectional area A2 is different from the first cross-sectional area A1. Thereby, an improved method for controlling a flow rate of a liquid out from the filter holding is achieved. Itemized list of examples:
1. A method 100, for controlling a flow rate of a liquid out from a filter holding assembly 15 in a coffee machine, comprising said filter holding assembly 15, wherein said filter holding assembly 15 comprises a filter funnel 17 for receiving a filter for filtering the liquid and a holder 19 arranged to receive said filter funnel 17, wherein said holder 19 comprises a first opening 21 and said filter funnel 17 comprises a second opening 23, said method comprising:
   - inserting 101 said filter funnel 17 in said holder 19 in a first position relatively said holder 19, in which the first position said first opening 21 and said second opening 23 are arranged to form a first passage 25 for conveying said liquid, the first passage 25 having a first cross-sectional area A1, characterized by
   - inserting 103 said filter funnel 17 in said holder 19 in a second position relatively said holder 19, in which the second position said first opening 21 and said second opening 23 are arranged to form a second passage 27 for conveying said liquid, the second passage 27 having a second cross-sectional area A2, wherein the second cross-sectional area A2 is different from the first cross-sectional area A1.
2. The method according to example 1, wherein said filter funnel 17 comprises at least two openings including said second opening 23, wherein said first passage 25 is formed by said first opening 21 and one of said at least two openings, and wherein said second passage 27 is formed by said first opening 21 and at least two of said at least two openings.
3. The method according to example 1 or 2, wherein said first cross-sectional area A1 is smaller than said second cross-sectional area A2.
4. The method according to any one of the preceding examples, wherein, said second position corresponds to a 180-degree rotation of said filter funnel 17 relatively said first position.
5. A filter holding assembly 15 for a coffee machine comprises:
   - a filter funnel 17 for receiving a filter for filtering a liquid of the coffee machine and
   - a holder 19 arranged to receive said filter funnel,
wherein said holder 19 comprises a first opening 21 and said filter funnel 17 comprises a second opening 23,
wherein said filter funnel 17 is arranged to be inserted in said holder 19 in a first position relatively said holder 19, in which the first position said first opening 21 and said second opening 23 are arranged to form a first passage 25 for conveying said liquid out from said filter holding assembly 15, the first passage 25 having a first cross-sectional area A1, characterized in that
said filter funnel 17 is arranged to be inserted in said holder 19 in a second position relatively said holder 19, in which the second position said first opening 21 and said second opening 23 are arranged to form a second passage 27 for conveying said liquid out from said filter holding assembly 15, the second passage having a second cross-sectional area A2, wherein the second cross-sectional area A2 is different from the first cross-sectional area A1.

## Claims

1. A coffee machine (1) comprising:
a water reservoir (3) arranged to provide water for brewing coffee,
a container (5) arranged to receive the water and to hold a coffee substance,
a pump (7) arranged to pump the water from said water reservoir (3) to said container (5), and
a measuring means (9) arranged to measure an amount of water to be brewed in said water reservoir (3), wherein
said coffee machine (1) is arranged to measure an actual flow speed of water from said water reservoir (3) to said container (5),
and wherein said coffee machine (1) comprises a control unit (11) arranged to control said pump (7) to generate a desired flow speed of water based on:
- said amount of water to be brewed,
- a predetermined period of time, and
- said actual flow speed, whereby said amount of water is provided to said container (5) during said predetermined period of time, **characterized by** said predetermined period of time comprises a first sub-period of time and a second sub-period of time, being subsequent to the first sub-period of time, wherein said control unit (11) is arranged to control said pump (7) to generate a first desired flow speed of water during said first sub-period of time and a second desired flow speed of water during said second sub-period of time, wherein said first desired flow speed is greater than said second desired flow speed.

2. The coffee machine (1) according to claim 1, wherein said measuring means (9) is arranged to measure said actual flow speed of water.

3. The coffee machine (1) according to claim 1, comprising a flowmeter (13) arranged to measure said actual flow speed of water.

4. The coffee machine (1) according to any one of preceding claims, wherein said control unit (11) is arranged to control said pump (7) by controlling a speed of the pump (7) caused by an electric motor arranged to drive said pump (7).

5. The coffee machine (1) according to any one of the preceding claims, wherein said pump (7) is controlled continuously.

6. The coffee machine (1) according to any one of the preceding claims, wherein said coffee machine (1) is arranged to make drip coffee.

## Patentansprüche

1. Kaffeemaschine (1), Folgendes umfassend:
einen Wassertank (3), angeordnet, um Wasser zum Brauen von Kaffee bereitzustellen,
einen Behälter (5), angeordnet, um das Wasser aufzunehmen und eine Kaffeesubstanz zu halten,
eine Pumpe (7), angeordnet, um das Wasser von dem Wassertank (3) zu dem Behälter (5) zu pumpen, und
ein Messmittel (9), angeordnet, um eine Wassermenge zu messen, die in dem Wassertank (3) gebraut werden soll, wobei
die Kaffeemaschine (1) angeordnet ist, eine tatsächliche Strömungsgeschwindigkeit des Wassers von dem Wassertank (3) zu dem Behälter (5) zu messen,
und wobei die Kaffeemaschine (1) eine Steuerungseinheit (11) umfasst, angeordnet, die Pumpe (7) zu steuern, um eine gewünschte Strömungsgeschwindigkeit des Wassers zu erzeugen, basierend auf:
- der zu brauenden Wassermenge,
- einem vorbestimmten Zeitraum und
- der tatsächlichen Strömungsgeschwindigkeit, durch welche die Wassermenge dem Behälter (5) während des vorbestimmten Zeitraums bereitgestellt wird, **dadurch gekennzeichnet, dass** der vorbestimmte Zeitraum einen ersten Teilzeitraum und einen zweiten Teilzeitraum, der an den ersten Teilzeitraum anschließt, umfasst,
wobei die Steuerungseinheit (11) angeordnet ist, die Pumpe (7) zu steuern, um eine erste gewünschte Strömungsgeschwindigkeit des Wassers während des ersten Teilzeitraums und eine zweite gewünschte Strömungsgeschwindigkeit des Wassers während des zweiten Teilzeitraums zu erzeugen, wobei die erste gewünschte Strömungsgeschwindigkeit größer als die zweite gewünschte Strömungsgeschwindigkeit ist.

2. Kaffeemaschine (1) nach Anspruch 1, wobei das Messmittel (9) angeordnet ist, die tatsächliche Strömungsgeschwindigkeit des Wassers zu messen.

3. Kaffeemaschine (1) nach Anspruch 1, umfassend ein Strömungsmessgerät (13), angeordnet, die tatsächliche Strömungsgeschwindigkeit des Wassers zu messen.

4. Kaffeemaschine (1) nach einem der vorhergehenden Ansprüche, wobei die Steuerungseinheit (11) angeordnet ist, die Pumpe (7) zu steuern, indem sie eine Drehzahl der Pumpe (7) steuert, die von einem Elektromotor verursacht wird, der angeordnet ist, die Pumpe (7) anzutreiben.

5. Kaffeemaschine (1) nach einem der vorhergehenden Ansprüche, wobei die Pumpe (7) kontinuierlich gesteuert wird.

6. Kaffeemaschine (1) nach einem der vorhergehenden Ansprüche, wobei die Kaffeemaschine (1) angeordnet ist, Filterkaffee herzustellen.

## Revendications

1. Machine (1) à café comportant :
un réservoir (3) à eau agencé pour fournir de l'eau destinée à infuser du café,
un récipient (5) agencé pour recevoir l'eau et pour contenir une substance de café,
une pompe (7) agencée pour pomper l'eau dudit réservoir (3) à eau audit récipient (5), et
un moyen (9) de mesure agencé pour mesurer une quantité d'eau à infuser dans ledit réservoir (3) à eau,
ladite machine (1) à café étant agencée pour mesurer une vitesse réelle d'écoulement d'eau dudit réservoir (3) à eau audit récipient (5),
et ladite machine (1) à café comportant une unité (11) de commande agencée pour commander ladite pompe (7) afin de générer une vitesse souhaitée d'écoulement d'eau d'après :
- ladite quantité d'eau à infuser,
- une période prédéterminée, et
- ladite vitesse réelle d'écoulement, ladite quantité d'eau étant ainsi fournie audit récipient (5) pendant ladite période prédéterminée, **caractérisé en ce que** ladite période prédéterminée comporte une première sous-période et une seconde sous-période, qui est postérieure à la première sous-période, ladite unité (11) de commande étant agencée pour commander ladite pompe (7) afin de générer une première vitesse souhaitée d'écoulement d'eau pendant ladite première sous-période et une seconde vitesse souhaitée d'écoulement d'eau pendant ladite seconde sous-période, ladite première vitesse souhaitée d'écoulement étant supérieure à ladite seconde vitesse souhaitée d'écoulement.

2. Machine (1) à café selon la revendication 1, ledit moyen (9) de mesure étant agencé pour mesurer ladite vitesse réelle d'écoulement d'eau.

3. Machine (1) à café selon la revendication 1, comportant un débitmètre (13) agencé pour mesurer ladite vitesse réelle d'écoulement d'eau.

4. Machine (1) à café selon l'une quelconque des revendications précédentes, ladite unité (11) de commande étant agencée pour commander ladite pompe (7) en commandant une vitesse de la pompe (7) causée par un moteur électrique agencé pour entraîner ladite pompe (7) .

5. Machine (1) à café selon l'une quelconque des revendications précédentes, ladite pompe (7) étant commandée de manière continue.

6. Machine (1) à café selon l'une quelconque des revendications précédentes, ladite machine (1) à café étant agencée pour préparer du café goutte à goutte.
